# EUROPEAN PATENT SPECIFICATION

(11) **EP 2 058 141 B1**
(45) Date of publication and mention of the grant of the patent: **09.03.2011**
(21) Application number: 08168417.7
(22) Date of filing: 05.11.2008
(51) Int. Cl.: B60B 39/00, B62D 25/16

(54) **Anti-aquaplaning device**
Vorrichtung gegen Aquaplaning
Dispositif anti-aquaplanage

(30) Priority: 07.11.2007 IT BO20070740
(43) Date of publication of application: 13.05.2009
(73) Proprietor: Pozzi, Marco, 23900 Lecco (IT)
(72) Inventor: Pozzi, Marco, 23900 Lecco (IT)
(74) Representative: Ponzellini, Gianmarco

(56) References cited:
- DE-A1- 2 333 853
- DE-A1- 2 524 344
- DE-A1-102004 051 762
- DE-U1- 29 500 043
- GB-A- 2 419 855
- US-A- 3 834 732

## Description

The present invention refers to vehicles with roads and/or runways wheels and it refers to an anti-aquaplaning device and method, particularly suitable for avoiding or refusing the aquaplaning risks, in other words, for dynamic sustenance on a water film of wheels of automobiles, bus, trucks, motorcycles, aircraft trolleys and the similar wheel means.

The aquaplaning effect occurs when a car reaches at a relative high speed on a roadway in which there are water pools, in these cases the wheels lose adherence with the roadway and the car is without directional control.

The aquaplaning effect becomes more serious when the water layer depth increases, when the specific pressure exercised by the tyres on the roadway decreases and when the draining capacity of the tyres decreases, for example due to the tyre tread wearing.

Document DE 25 24 344 discloses an anti-aquaplaning device fit to be installed in a vehicle and to be associated with at least one wheel of said vehicle fit to run on a road with a respective roadway. Said device comprises at least an evacuating means fit to block possible water, wastes, sands, gravels, snow, leaves or the like raised by the wheel to remove them away from the wheel.
The device further comprises at least one removal means acting on a portion of said roadway immediately before one respective wheel to move away from the wheel path on the roadway possible water, wastes, sands, gravels, snow, leaves or the like.
Said removal means is equipped with at least a nozzle, distributing a compressed gas, fixed to the vehicle and orientated toward a respective wheel in direction of roadway portion immediately in front of the respective wheel to hit said portion with a compressed gas jet. Each nozzle is fed by gas by means of a respective feeding duct.
The preamble of claim 1 of the present application consists of the above features known from document DE 25 24 344.
The prior art of the present application comprises the documents US 3 834 732, DE 10 2004 051762, DE 295 00 043, DE 23 33 853 and GB 2 419 855; the above mentioned document DE 25 24 344 is the closest prior art.

An object of this invention is to provide an anti-aquaplaning device fit to avoid or reduce the aquaplaning effect.

Other object is to reduce the braking distances in case of wet ground, sandy ground, gravely ground, or ground covered with soft snow.

The characteristics of invention are evidenced in the following with particular reference to the attached drawings, in which:
- figures 1 and 2 show respectively schematic front and side views of the anti-aquaplaning device, object of the present invention, associated to a front wheel of a vehicle;
- figures 3 and 4 show respectively front and side views of a removal means of the device of figure 1;
- figures 5 and 6 show respectively front and side views of an evacuating means of the device of figure 1.

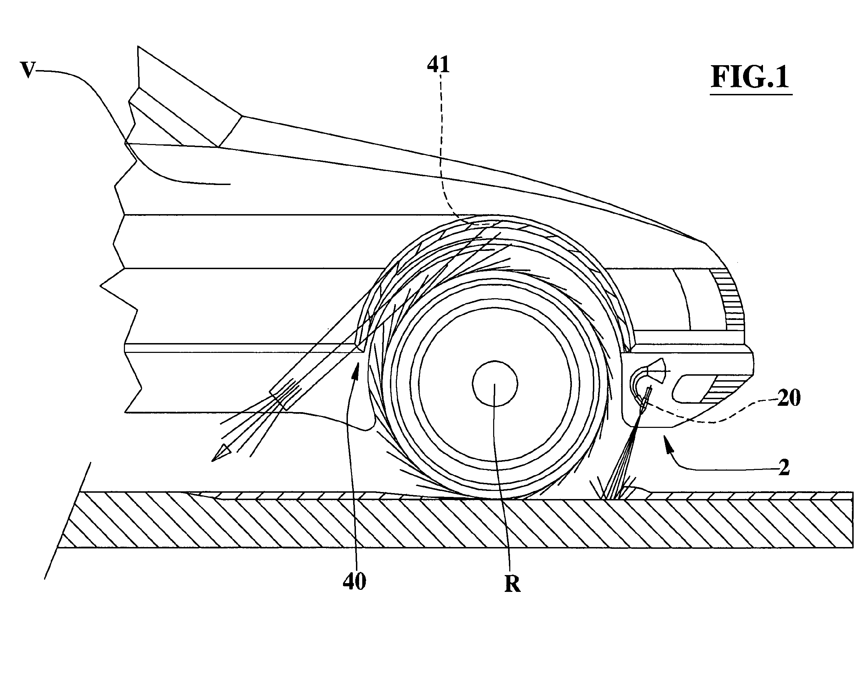

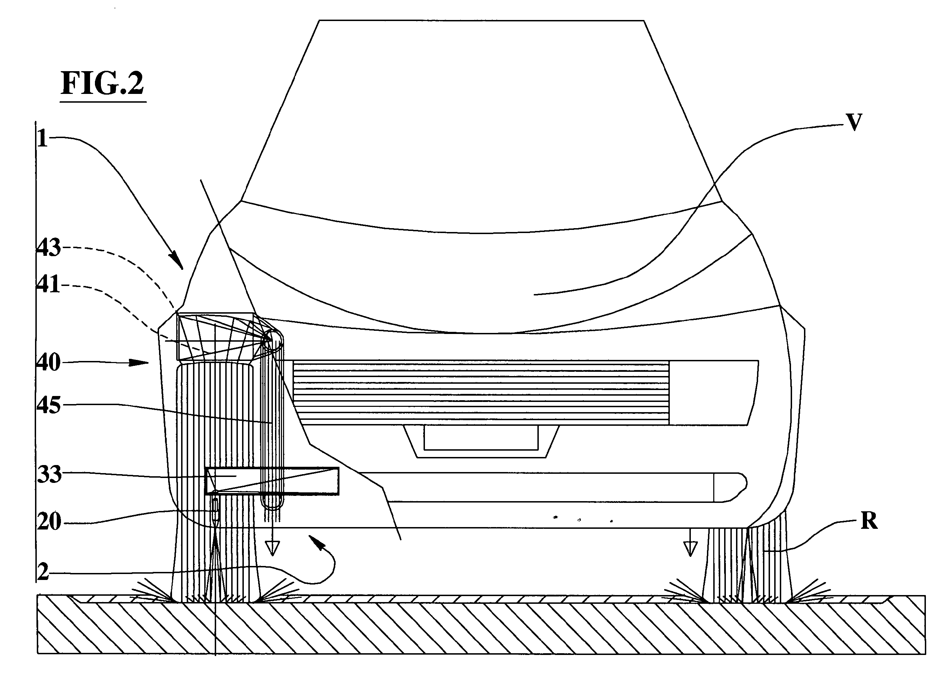

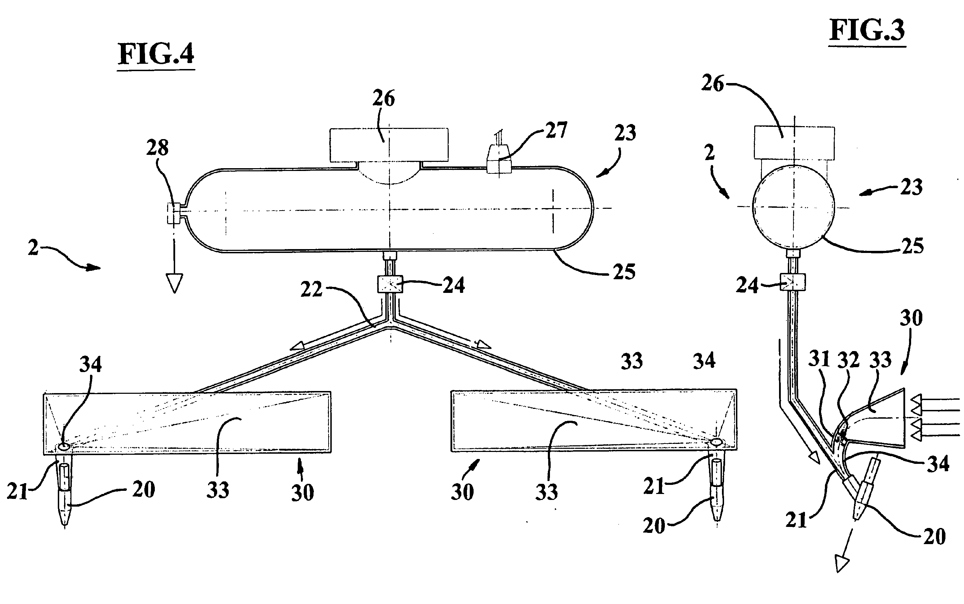

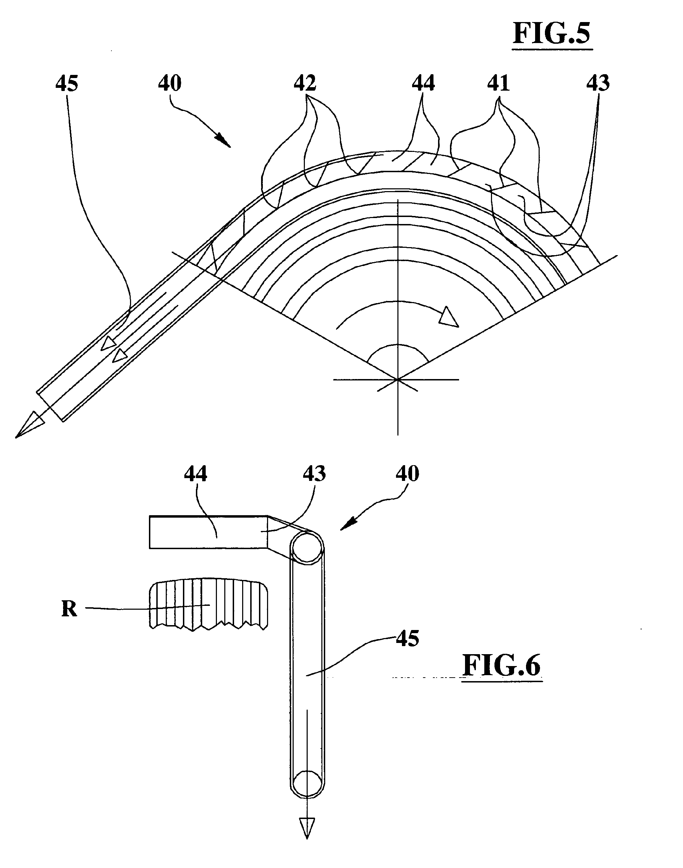

With reference to figures 1-6, numeral 1 indicates the anti-aquaplaning device object of the present invention fit to be installed in a vehicle V fit to run on a road or a runway with a respective roadway and consisting, for example, in a car, truck, bus, motor cycle, aircraft trolley or the like. The device 1 is fit to be associated to at least a wheel R of such vehicle, for example, to the front wheel of a motor cycle, to the front wheels or to all the wheels of a car or to the front wheels of the main trolley and/or to the wheels of the aircraft front trolley.

The device 1 includes a water-removal means 2 on the way of the respective wheel and a evacuating means 40 of the lifted water by the corresponding wheel. Obviously said means can remove and evacuate other materials interfering with the correct wheel running, such as sand, gravel, snow, wastes, dried leaves and the like. In alternative, the invention provides that the device 1 can comprise either only suction means 2 or only evacuating means 40.

Each removal means 2 of the anti-aquaplaning device 1 acts on a portion of said roadway immediately in front of the respective wheel for moving away, from the path of the wheel on the roadway, the eventual water, waste, sands, gravels, snow, leaves or the like.

The removal means 2 is equipped with at least a nozzle 20, distributing a compressed gas, preferably compressed air for each wheel associated therewith.

Each nozzle 20 is fixed to the vehicle and is orientated in direction of the roadway portion immediately in front of the respective wheel for giving said portion a jet of the compressed gas.

Such nozzle 20 is fed by gas by means of a respective feeding duct 21 connected to a collector 22, common to all the nozzles 20, connecting to a source of compressed gas 23.

The collector 22 is provided with first remote controlled valve means 24 fit to command the distribution of the compressed gas to the nozzle 20 or to the nozzles.

Said valve means can be controlled automatically, for example, by rain sensors of the vehicle or by water detectors or by other materials on the roadway, or by the driver.

The source of compressed gas 23 includes a tank 25 flowing into collector 22 and fed by a compressor 26 preferably of centrifugal type.

The tank 25 is provided with a pressure switch 27 controlling the compressor and with a safety-valve 28 fit to prevent the occurrence of excessive pressures.

Each feeding duct 21 of a respective nozzle 20 is furthermore connected to a corresponding dynamic air intake means 30 flowing into said feeding duct 21 through a respective one-way valve 31 fit to prevent the emission of compressed air coming from the tank through the dynamic air intake 30.

Each of the dynamic air intake means 30 has a filter means or a grid means 32 fit to avoid that sands, stones or wastes may reach and obstruct the nozzle 20.

Each of the dynamic air intake means 30 has a spout means 33 joined with the respective feeding duct 21 by means of low-pressure duct 34.

Each one-way valve 31 is housed in the respective low-pressure duct 34 that, as the feeding duct 21, is short and without corners to reduce the loss of dynamic airflow.

The spout means 33 has an aerodynamic configuration with high efficiency, for example with the NACA type intake.

The nozzle 20 can optionally be of variable type for high efficiency operation with gas at high or medium pressure of the tank and at low-pressure dynamically supplied by the spout means 33.

Each evacuating means 40, fit to block eventual water, wastes, sands, gravels, snow, leaves or the like raised by the wheel for moving away therefrom so preventing the back falling down onto the wheel, comprises a plurality of deflectors 41 mutually spaced at least in approximately regular way and placed around the upper portion of the perimeter of the respective wheel.

Each deflector 41 has a respective leading edge 42 almost parallel or slightly inclined with respect to the water path or to other material raised by the respective wheel, and furthermore has a deviation wall 43 joined to the leading edge and bent towards a side of the respective wheel.

The deflectors 41 cooperate to carry out a plurality of interposed outflow channels 44 distributed around the upper portion of the perimeter of the respective wheel.

Said outflow channels 44 merge into at least one outflow duct 45 flowing sideways or preferably downstream of the wheel for discharging the water or other material in a position without causing drawbacks to the vehicle or other following vehicles. For example, the final portion of the outflow duct 45 can be configured so to reduce the aerosol and to improve the visibility for the following vehicles.

For maintaining constant the distance of the leading edges from the tyre tread of the wheel, each evacuating means 40 is integral with a portion of the vehicle fixed with respect to the axis of the respective wheel, for example, a support portion of the pliers for the wheel disk brake.

The operation of the device provides that the air jet outgoing from the nozzle, for example, supplied under a certain speed by the source of the compressed gas 23 and above said speed by the dynamic air intake means 30, removes the water and/or other materials from the roadway which is going to be occupied by the wheel so that it can directly put on said roadway avoiding or reducing the aquaplaning risk.

The deflectors 41 of the evacuation means 40 prevent the water or other materials, raised by the wheel, to fall down again onto the same wheel or onto the following wheels so preventing that said water or other material block the ribs of the tyre tread preventing or reducing the aquaplaning risk.

It must be observed that the contemporary use of suction means 2 and evacuating means 40 on the same wheel provides an effect bigger than the total effects due to two separated means.

An advantage of the present invention is to provide an anti-aquaplaning device fit to avoid or reduce the aquaplaning effect and the risks coming from the existence of dusts, sands, gravels, snow, wastes, leaves, debris and the like on the roadway.

Other advantage is to reduce the braking distance in case of wet, sandy, gravelled ground or ground covered with soft snow.

Further advantage is to reduce the water nebulization improving the visibility for eventual vehicles which follow the vehicle equipped with the device.

## Claims

1. Anti-aquaplaning device fit to be installed in a vehicle (V) and to be associated with at least one wheel (R) of said vehicle fit to run on a road with a respective roadway; said device (1) comprises at least an evacuating means (40) fit to block possible water, wastes, sands, gravels, snow, leaves or the like raised by the wheel to remove them away from the wheels, it further comprises at least one removal means (2) acting on a portion of said roadway immediately before of at least one respective wheel to move away from the wheel path on the roadway possible water, wastes, sands, gravels, snow, leaves or the like, said removal means (2) is equipped with at least a nozzle 20, distributing a compressed gas, fixed to the vehicle and orientated toward a respective wheel in direction of roadway portion immediately in front of the respective wheel to hit said portion with a compressed gas jet; each nozzle (20) being fed by gas by means of a respective feeding duct (21): said device (1) being **characterised in that** each feeding duct 21 is connected with a collector (22) connecting a source of compressed gas (23); said collector (22) is provided with first remote controlled valve means (24) fit to control the distribution of the compressed gas to the nozzle (20) or to the nozzles; said source of compressed gas (23) comprising a tank (25), flowing into the collector (22), fed by a compressor (26) and equipped with at least cither one pressure switch (27) controlling the compressor or safety-valve (28).

2. Device according to claim 1 **characterised in that** the evacuation means (40) includes a set of deflectors (41) each having a respective leading edge (42) almost parallel or slightly inclined with respect to the water path or other material raised by the respective wheel and a deviation wall (43) bent towards at least one side of the respective wheel.

3. Device according to claim 2 **characterised in that** it comprises a plurality of deflectors (41) mutually spaced in approximately regular way and cooperating to carry out a plurality of interposed outflow channels (44) distributed around a portion of the perimeter of the respective wheel.

4. Device according to claim 3 **characterised in that** the outflow channels (44) merge into at least an outflow duct (45) flowing sideways or preferably downstream of the wheel.

5. Device according to any one of claims 1-4 **characterised in that** each evacuating means (40) is integral with a portion of the vehicle fixed in respect to the axis of the respective wheel.

6. Device according to any one of claims 1-5 **characterised in that** it comprises an evacuating means (40) for at least each front wheel of the vehicle or at least for each wheel not directly preceded by another wheel of the same vehicle.

7. Device according to claim 1 **characterised in that** the feeding duct (21) of each nozzle (20) is further connected to a corresponding dynamic air intake means (30) flowing into its feeding duct (21) through a respective one-way valve (31); each of the dynamic air intake means (30) has a spout means (33) having an aerodynamic configuration with high efficiency and joined with the respective feeding duct (21) by means of an own low-pressure duct (34).

8. Device according to claim 7 **characterised in that** each one-way valve (31) is housed in the respective low-pressure duct (34) and that each of the dynamic air intake means (30) has a filter means or grid means (32).

9. Device according to claim 1 **characterised in that** the nozzle (20) is of variable type for operating with high efficiency with gas at high or medium pressure and at low-pressure.

10. Device according to any one of the preceding claims **characterised in that** it comprises a nozzle (20) for at least each front wheel of the vehicle or at least for each wheel not directly preceded by another wheel of the same vehicle.

## Patentansprüche

1. Anti-Aquaplaningvorrichtung, die geeignet ist, in einem Fahrzeug (V) installiert und mit mindestens einem Rad (R) des Fahrzeugs assoziiert zu werden, um auf einer Straße mit einer entsprechenden Fahrbahn zu fahren; wobei die Vorrichtung (1) mindestens ein Evakuierungsmittel (40) umfasst, das geeignet ist, mögliches Wasser, Schmutz, Sand, Schotter, Schnee, Laub oder dergleichen, die vom Rad aufgeworfen werden, zu blockieren, um sie vom Rad zu entfernen, wobei sie weiter umfasst: mindestens ein Entfernungsmittel (2), das auf einen Teil der Fahrbahn unmittelbar vor mindestens einem entsprechenden Rad wirkt, um vom Pfad des Rades auf der Fahrbahn mögliches Wasser, Schmutz, Sand, Schotter, Schnee, Laub oder dergleichen, zu entfernen, wobei das Entfernungsmittel (2) mit mindestens einer Düse (20) ausgerüstet ist, die ein komprimiertes Gas verteilt und die am Fahrzeug fixiert und auf ein entsprechendes Rad in Richtung eines Teils der Fahrbahn unmittelbar vor dem entsprechenden Rad ausgerichtet ist, um den Teil mit einem Strahl des komprimierten Gases zu treffen; wobei die Vorrichtung (1) **dadurch gekennzeichnet ist, dass** jede Zuführungsleitung (21) mit einem Kollektor (22) verbunden ist, der eine Quelle komprimierten Gases verbindet; wobei die Quelle komprimierten Gases erste ferngesteuerte Ventilmittel (24) aufweist, die geeignet sind, die Verteilung des komprimierten Gases an die Düse (20) oder die Düsen zu steuern; wobei die Quelle komprimierten Gases (23) einen Tank (25) umfasst, der in den Kollektor (22) mündet, zugeführt durch einen Kompressor (26) und ausgerüstet mit mindestens entweder einem Druckschalter (27), der den Kompressor oder einem Sicherheitsventil (28).

2. Vorrichtung nach Anspruch 1, **dadurch gekennzeichnet, dass** das Evakuierungsmittel (40) einen Satz von Deflektoren (41) beinhaltet, wobei jeder eine entsprechende Anströmkante (42) aufweist, die nahezu parallel oder leicht angewinkelt ist in Bezug auf den Pfad des Wassers oder anderen Materials, das vom entsprechenden Rad aufgeworfen wird, und einer Ablenkungswand (43), die zu mindestens einer Seite des entsprechenden Rades hin gebogen ist.

3. Vorrichtung nach Anspruch 2, **dadurch gekennzeichnet, dass** sie eine Mehrzahl von Deflektoren (41) umfasst, die zueinander auf ungefähr regelmäßige Weise beabstandet sind und die zusammenwirken, um eine Mehrzahl zwischengeschalteter Ausgabekanäle (44) zu realisieren, die um einen Teil des Umfangs des entsprechenden Rades verteilt sind.

4. Vorrichtung nach Anspruch 3, **dadurch gekennzeichnet, dass** die Ausgabekanäle (44) sich in einer Ausgabeleitung (45) vereinigen, die seitlich oder vorzugsweise zum Rad nachgeordnet mündet.

5. Vorrichtung nach einem der Ansprüche 1-4, **dadurch gekennzeichnet, dass** jedes Evakuierungsmittel (40) mit einem Teil des Fahrzeugs einteilig ausgeführt ist, der in Bezug auf die Achse des entsprechenden Rades fixiert ist.

6. Vorrichtung nach einem der Ansprüche 1-5, **dadurch gekennzeichnet, dass** sie ein Evakuierungsmittel (40) für mindestens jedes Vorderrad des Fahrzeugs oder mindestens für jedes Rad, dem nicht ein anderes Rad desselben Fahrzeugs vorangeht, umfasst.

7. Vorrichtung nach Anspruch 1, **dadurch gekennzeichnet, dass** die Zuführungsleitung (21) jeder Düse (20) weiter mit einem dynamischen Luftansaugmittel (30) verbunden ist, das in deren Zuführungsleitung (21) durch ein entsprechendes Einwegventil (31) mündet; wobei jedes der dynamischen Luftansaugmittel (30) ein Auslassmittel (33) aufweist, das eine aerodynamische Konfiguration mit hoher Effizienz aufweist und das an den entsprechenden Zuführungsleitung (21) mittels einer eigenen Niederdruckleitung (34) angeschlossen ist.

8. Vorrichtung nach Anspruch 7, **dadurch gekennzeichnet, dass** jedes Einwegventil (31) in der entsprechenden Niederdruckleitung (34) untergebracht ist und **dadurch**, dass jedes der dynamischen Luftansaugmittel (30) ein Filtermittel oder Gittermittel (32) aufweist.

9. Vorrichtung nach Anspruch 1, **dadurch gekennzeichnet, dass** die Düse (20) variablen Typs ist, zum hocheffizientem Betrieb mit Gas bei hohem oder mittlerem Druck und bei niedrigem Druck.

10. Vorrichtung nach einem der vorhergehenden Ansprüche, **dadurch gekennzeichnet, dass** sie eine Düse (20) für mindestens jedes Vorderrad des Fahrzeugs oder mindestens für jedes Rad, dem nicht ein anderes Rad desselben Fahrzeugs vorangeht, umfasst.

## Revendications

1. Dispositif anti-aquaplanage destiné à être installé dans un véhicule (V) et à être associé avec au moins une roue (R) sur ledit véhicule approprié pour circuler sur une route avec un revêtement routier respectif, ledit dispositif (1) comprenant au moins un moyen d'évacuation (40) convenable pour bloquer l'eau, les déchets, le sable, le gravier, la neige, les feuilles ou similaires éventuellement soulevé(e)s par la roue pour les enlever en éloignement de la roue, comprenant en outre au moins un moyen d'enlèvement (2) agissant sur une portion dudit revêtement routier immédiatement devant au moins une roue respective pour déplacer en éloignement du trajet de la roue sur le revêtement routier l'eau, les déchets, le sable, le gravier, la neige, les feuilles ou similaires éventuellement présent(e)s, lesdits moyens d'enlèvement (2) étant équipés d'au moins une buse (20) qui distribue un gaz comprimé, fixée au véhicule et orientée vers une roue respective en direction d'une portion du revêtement routier immédiatement en avant de la roue respective pour envoyer sur ladite portion un jet de gaz comprimé ; chaque buse (20) étant alimentée en gaz au moyen d'un conduit d'alimentation respectif (21) ; ledit dispositif (1) étant **caractérisé en ce que** chaque conduit d'alimentation (21) est connecté à un collecteur (22) connecté à une source de gaz comprimé (23) ; ledit collecteur (22) étant pourvu d'un premier moyen formant valve commandée à distance (24) convenable pour commander la distribution de gaz comprimé vers la buse (20) ou vers les buses ; ladite source de gaz comprimé (23) comprenant un réservoir (25), relié au collecteur (22), alimenté par un compresseur (26) et équipé d'au moins un pressostat (27) qui commande le compresseur ou une vanne de sécurité (28).

2. Dispositif selon la revendication 1, **caractérisé en ce que** les moyens d'évacuation (40) incluent un groupe de déflecteurs (41) ayant chacun un bord d'attaque respectif (42) pratiquement parallèle ou légèrement incliné par rapport au trajet de l'eau ou d'autres matériaux soulevé(e)s par la roue respective, et une paroi de déviation (43) courbée vers au moins un côté de la roue respective.

3. Dispositif selon la revendication 2, **caractérisé en ce qu'**il comprend une pluralité de déflecteurs (41) mutuellement espacés de manière approximativement régulière et coopérant pour ménager une pluralité de canaux de sortie interposés (44) distribués autour d'une portion du périmètre de la roue respective.

4. Dispositif selon la revendication 3, **caractérisé en ce que** les canaux de sortie (44) se fondent en au moins un conduit de sortie (45) qui s'écoule vers les côtés ou de préférence vers l'aval de la roue.

5. Dispositif selon l'une quelconque des revendications 1 à 4, **caractérisé en ce que** chacun des moyens d'évacuation (40) est réalisé de manière intégrale avec une portion du véhicule, fixé par rapport à l'axe de la roue respective.

6. Dispositif selon l'une quelconque des revendications 1 à 5, **caractérisé en ce qu'**il comprend des moyens d'évacuation (40) pour au moins chaque roue avant du véhicule ou au moins pour chaque roue qui n'est pas directement précédée par une autre roue du même véhicule.

7. Dispositif selon la revendication 1, **caractérisé en ce que** le conduit d'alimentation (21) de chaque buse (20) est en outre connecté à un moyen d'admission d'air dynamique correspondant (30) pour l'air qui s'écoule dans ce conduit d'alimentation (21) via un clapet unidirectionnel respectif (31); chaque moyen d'admission d'air dynamique (30) comprenant un moyen en forme de bec (33) ayant une configuration aérodynamique à grande efficacité, et réuni au conduit d'alimentation respectif (21) au moyen d'un propre conduit à basse pression (34).

8. Dispositif selon la revendication 7, **caractérisé en ce que** chaque clapet unidirectionnel (31) est logé dans le conduit à basse pression (34) respectif, et **en ce que** chaque moyen d'admission d'air dynamique (30) comprend un moyen formant filtre ou un moyen formant grille (32).

9. Dispositif selon la revendication 1, **caractérisé en ce que** la buse (20) est du type variable pour fonctionner avec haute efficacité avec du gaz sous haute pression ou sous pression moyenne ainsi qu'à basse pression.

10. Dispositif selon l'une quelconque des revendications précédentes, **caractérisé en ce qu'**il comprend une buse (20) pour au moins chaque roue avant du véhicule ou au moins pour chaque roue qui n'est pas directement précédée par une autre roue du même véhicule.
